# EUROPEAN PATENT SPECIFICATION

(11) **EP 3 078 424 B1**
(45) Date of publication and mention of the grant of the patent: **20.10.2021**
(21) Application number: 14867050.8
(22) Date of filing: 26.11.2014
(51) Int. Cl.: B02C 17/22

(54) **BALL MILL LINER ASSEMBLY AND INSTALLATION METHOD THEREOF**
AUSKLEIDUNGSANORDNUNG FÜR KUGELMÜHLE UND INSTALLATIONSVERFAHREN DAFÜR
ENSEMBLE DE REVÊTEMENTS DE BROYEUR À BOULETS ET PROCÉDÉ D'INSTALLATION ASSOCIÉ

(30) Priority: 03.12.2013 CN 201310645483
(43) Date of publication of application: 12.10.2016
(73) Proprietor: Xuzhou Qiaoxin Mining Machinery Manufacturing Co., Ltd., Xuzhou, Jiangsu Province 221000 (CN)
(72) Inventor: CHEN, Chen, Xuzhou Jiangsu 221006 (CN)
(74) Representative: Proi World Intellectual Property GmbH
(86) International application number: PCT/CN2014/092233
(87) International publication number: WO 2015/081800

(56) References cited:
- CA-A1- 2 305 481
- CN-A- 102 179 277
- CN-U- 203 598 881
- CN-Y- 2 444 678
- CN-Y- 2 905 212
- DE-A1-102010 016 286
- JP-A- 2009 154 096
- US-A- 6 036 127
- None

## Description

### Technical Field

The invention relates to a ball mill liner, in particular to a ball mill liner assembly and installation method thereof.

### Background

Ball mills are main grinding equipment used in the mine, cement, electric power and chemical industries, etc. By now, ball mill liners are still mainly made of metal and partially made of rubber under two-section and three-section conditions. According to the statistics, the national annual consumption of metal liners is about 600,000t, wherein the main metal material is iron. Iron is a kind of finite resource owned by the human beings, in particular in China, iron mines are barren with high mining costs and serious environmental pollution; the main issues on metal liners are heavy weight, severe wear, high metal consumption, high operating cost, high operating energy consumption of ball mills, poor working environment and large maintenance load; metal liners have a high production energy consumption and generate environmental pollution such as waste sand and exhaust in the production process; in the cement industry, metal inclusions caused by wear of metal liners will reduce the cement quality; in the food and pharmaceutical industries, metal liners will bring heavy metal pollution with great hazards; in the mine industry, usage and maintenance of metal liners is one of main factors influencing the output and the production cost; under a few of working conditions, although rubber liners reduce some costs, their service life is shorter than that of metal liners and the elasticity of rubber results in production drawdown of 10%; therefore, a ball mill liner assembly and installation method thereof is urgently required to solve the aforementioned issues.

An example of ball mill is disclosed in CA 2 305 481. The ball mill includes a liner with main plates and wedging plates. The wedging plates are used for fastening the main plates, which also leads to a fastening of the wedging plates.

### Summary of the Invention

The invention puts forward a ball mill drum comprising a liner assembly and installation method thereof, which overcomes the shortcomings and problems in the existing technologies, prolongs the service life, improves the grinding efficiency and reduces the energy consumption and costs.

The applicant puts forward that the ball mill involved in the ball mill liner assembly is grinding equipment instead of crushing equipment, and the theory of less crushing and more grinding is the fundamental solution to improve the production efficiency and reduce the wear. With application of the pre-crushing technology, the crushing section is arranged before grinding, the feeding size is reduced, and the ball mill works as professional grinding equipment gradually. While in the traditional theory, the gradation of the mill balls and the large-diameter mill balls and ball mill crushing section have a significant negative impact on improving the production efficiency and reducing the wear. The applicant finds through research that the large-dimension mill ball (with a diameter of larger than 40mm) in the traditional ball mill gradation fails to generate an effective grinding on the feeding particles (with a diameter of 1mm or below) of the ball mill with pre-crushing technology before grinding and causes serious damages to the liners; therefore, the applicant puts forward a ball mill liner assembly. Due to the previous pre-crushing technology and the dimension of the mill ball configured below 40mm, it is possible to use ceramic liners. The invention prolongs the service life of the mill liners, reduces the replacement and maintenance load of mill liners, improves the production efficiency of the enterprise and effectively reduces the operating energy consumption of the ball mill; in the cement industry, application of ceramic materials can prevent metal pollution to the metal liners and improve the quality of cement.

According to the invention there is provided a ball mill drum as defined in claim 1. The technical issues of the invention are solved i.a. through the following technical scheme:
A ball mill liner assembly, fitted into the ball mill drum, wherein comprising a plurality of wear-resistant liners and self-fixing liners alternately fitted into the inner wall of the drum; the wear-resistant liners are integrally made of ceramic materials and the self-fixing liners are made of ductile materials; the plurality of wear-resistant liners and self-fixing liners are assembled along the circumferential direction of the ball mill drum to form a circle; multiple assembled circles towards the axial line direction of the ball mill drum form the working face of the ball mill. When the ball mill works, the self-fixing liners bear the materials and the pressure radially applied by the balls along the ball mill drum and extend circumferentially, thus making the connection firmer with the wear-resistant liners in the ball mill drum.

Further design lies in that it also comprises installation modules. The wear-resistant liner is shaped in a circular arc adapted to the inner wall of the ball mill drum. The side fitted to the inner wall of the drum is a smooth surface or a hollow surface, while the other side is the working face. The working face is integrally in the shape of waves distributed along the circumference of the drum and a plurality of grooves for guiding the movement of the mill balls are uniformly arranged along the axial direction of the drum; a plurality of self-fixing liners are fully uniformly arranged on the circumference of the ball mill drum upwards at intervals, a group of wear-resistant liners and installation modules are filled between two adjacent self-fixing liners, the self-fixing liners and wear-resistant liners are arranged with two lug bosses to form the lug boss ends at the same direction end face along the circumference of the drum, their sides opposite to the lug boss ends are planes; a side of the installation module is connected with the plane end of the wear-resistant liner, the self-fixing liner is connected with the end of the wear-resistant liner with the lug boss, the lug boss end of the self-fixing liner is fitted against the other side of the installation module; the wear-resistant liner and the self-fixing liner form two-point contact connection with each adjacent self-fixing liner and installation module through each lug boss end, thus enabling firm matching between the liners; a hard gasket is arranged between each self-fixing liner and installation module through interference insertion, thus enabling adequate contact among the wear-resistant liner, the self-fixing liner and the installation module and preventing the gasket of the installation module from damaging the self-fixing liner due to interference insertion.

Further improvement lies in that the self-fixing liner has screw holes.

Further improvement lies in that the lug boss has oblique angles or circular arcs at both sides along the axial direction of the ball mill drum.

Further improvement lies in that the installation module is made of low-carbon alloy steel or steel plates.

Further improvement lies in that the self-ductile material is low-carbon alloy steel or carbon steel. An installation method of ball mill liner assembly, comprising the following steps to:
firstly use the self-fixing liners to divide the drum into several areas properly along the circumferential direction of the ball mill drum and utilize the existing screw holes of the ball mill drum to fix the self-fixing liners;
place the wear-resistant liner into the self-fixing liner division area in the ball mill drum circumferentially;
place the installation module above the lug boss on the self-fixing liner, enabling it to contact the end of the self-fixing liner with the lug boss and contact the end of the wear-resistant liner without the lug loss;
insert an iron wedge into the gap between the self-fixing liner and the installation module and hammer the iron wedge to fasten the liners at both sides along the circumferential direction; meanwhile, insert the gasket into the gap between the self-fixing liner and the installation module to realize tight fit among the liners in the whole area; then withdraw the iron wedge.

The invention uses ceramic materials to replace metal. Under the working condition of adjusting the maximum dimension of the mill ball in the ball mill properly, the ceramic liners can be applied to ball mills reliably and firmly. The service life of ceramic liners can reach 4-6 times of that of metal liners, which greatly improves the production efficiency of the enterprises and reduces the production costs. Since the ceramic density is only 38.5% of metal density, the weight of the whole liner only accounts for about 40% of the metal liner. Application of ceramic liners can reduce the operating energy consumption of ball mills. In the cement industry, application of ceramic materials can prevent metal pollution of metal liners and improve the quality of cement. Ceramic liners can be used to improve the working environment effectively and reduce the noises greatly. In the production process, ceramic liners can eliminate the environmental pollution such as waste sand and exhaust arising from production of traditional metal liners, reduce the production energy consumption greatly and meanwhile avoid consumption of much metal and expensive alloy elements to a great extent. Application of ceramic materials will reduce the national environment and energy costs greatly. In addition to improving the production efficiency of the enterprise greatly, the invention will also bring huge economic benefits and save resources.

The invention adopts the installation method of ball mill liner assembly to tightly fit the liners effectively and prevent the ceramic liners from breakage during pressing.

The invention adopts the no-bolt design and the installation form of assembling, which prevents the screw hole from becoming the stress center of the liner and resulting in cracks or cracking of the liner, solves the issue of applying high-hardness and low-ductileness wear-resistant materials to liners and solves the issues such as breakage of bolts of traditional bolted liners, powder and material leakage, shutdown, environmental pollution and heavy and complicated installation methods, thus greatly reducing the maintenance load of traditional bolted liners and further improving the production efficiency and working environment of the enterprise.

### Brief Description of the Drawings

Fig. 1 is the product profile of the invention;
Fig. 2 is the structure diagram of the self-fixing liner;
Fig. 3 is the stereoscopic structure diagram of the wear-resistant liner of the invention;
Fig. 4 is the inner side structure diagram of the wear-resistant liner.

### Detailed Description of the Preferred Embodiments

The technical scheme of the invention is further described combined with the attached drawings, but it shall not be construed as the restriction to the invention:

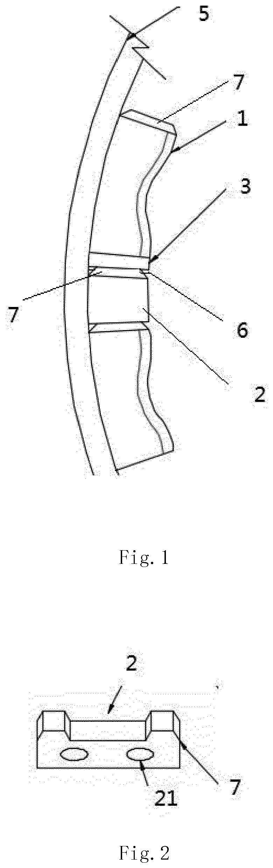

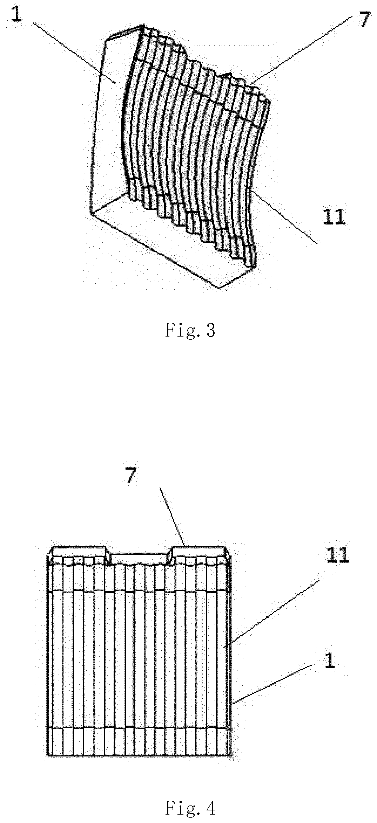

Fig. 1 is the product structure diagram of the invention. A ball mill liner assembly, fitted into the ball mill drum, comprising wear-resistant liners 1, self-fixing liners 2 and installation modules 3. Combined with Fig. 3 and Fig. 4, the wear-resistant liner 1 is shaped in a circular arc adapted to the inner wall of the ball mill drum, it is integrally made of ceramic materials, the side fitted to the inner wall of the drum is a smooth surface or a hollow surface, while the other side is the working face. The working face is integrally in the shape of waves distributed along the circumference of the drum and a plurality of grooves 11 for guiding the movement of the mill balls are uniformly arranged along the axial direction of the drum; the self-fixing liner 2 is made of low-carbon alloy steel, as shown in Fig. 2, the self-fixing liner 2 may have screw holes 21, the self-fixing liner 2 is fixed onto the ball mill drum by matching the bolts and the existing screw holes of the ball mill drum, the bolts are only service bolts, the service bolt is an industry term meaning that the bolt is only used to facilitate the installation without any action on the working state of the liner, i.e., without any fastening effect after completion of installation, the bolt may be removed or reserved in the drum and operated along with the mill; a plurality of self-fixing liners 2 are fully uniformly arranged on the circumference of the ball mill drum 5 upwards at intervals, a group of wear-resistant liners 1 and installation modules 3 are filled between two adjacent self-fixing liners 2, the self-fixing liners 2 and wear-resistant liners 1 are arranged with two lug bosses 7 to form the lug boss ends at the same direction end face along the circumference of the drum, their sides opposite to the lug boss ends are planes; a side of the installation module 3 is connected with the plane end of the wear-resistant liner 1, the self-fixing liner 2 is connected with the end of the wear-resistant liner 1 with the lug boss 7, the lug boss end of the self-fixing liner 2 is fitted against the other side of the installation module 3; the wear-resistant liner 1 and the self-fixing liner 2 form two-point extrusion contact connection with each adjacent self-fixing liner 3 and installation module 3 through each lug boss end, thus enabling firm matching between the liners; a hard gasket 6 is arranged between each self-fixing liner 2 and installation module 3 through interference insertion, thus enabling adequate extrusion contact among the wear-resistant liner 1, the self-fixing liner 2 and the installation module 3 and preventing the gasket 6 of the installation module 3 from damaging the self-fixing liner 2 due to interference extrusion.

An installation method of ball mill liner assembly, comprising the following steps to:
firstly use the self-fixing liners to divide the drum into several areas properly along the circumferential direction of the ball mill drum and utilize the existing screw holes of the ball mill drum to fix the self-fixing liners;
place the wear-resistant liner 1 into the self-fixing liner division area in the ball mill drum circumferentially;
place the installation module 3 above the lug boss on the self-fixing liner 2, enabling it to contact the end of the self-fixing liner 2 with the lug boss and contact the end of the wear-resistant liner 1 without the lug loss;
insert an iron wedge into the gap between the self-fixing liner 2 and the installation module 3 and hammer the iron wedge to fasten the liners at both sides along the circumferential direction; meanwhile, insert the gasket 6 into the gap between the self-fixing liner 2 and the installation module 3 to realize tight fit among the liners in the whole area; then withdraw the iron wedge.

The benefit of the invention is as follows: the invention uses ceramic materials to replace metal, adjusts the gradation of the mill ball of the ball mill properly and enables the ceramic liner to work on the ball mill firmly and reliably. The service life of ceramic liners can reach 4-6 times of that of metal liners, which greatly improves the production efficiency of the enterprises and reduces the production costs. Since the ceramic density is only 38.5% of metal density, the weight of the whole liner only accounts for about 40% of the metal liner. Application of ceramic liners can reduce the operating energy consumption of ball mills. In the cement industry, application of ceramic materials can prevent metal pollution of metal liners and improve the quality of cement. In the production process, ceramic liners can eliminate the environmental pollution such as waste sand and exhaust arising from production of traditional metal liners, reduce the production energy consumption greatly and meanwhile avoid consumption of much metal and expensive alloy elements to a great extent. Application of ceramic materials will reduce the national environment and energy costs greatly. In addition to improving the production efficiency of the enterprise greatly, the invention will also bring huge economic benefits and save resources. The invention adopts the installation method of ball mill liner assembly to tightly fit the liners effectively and prevent the ceramic liners from breakage during pressing.

## Claims

1. A ball mill drum with a ball mill liner assembly fitted therein, comprising:
a plurality of wear-resistant liners (1) and self-fixing liners (2) alternately fitted into an inner wall of the drum and further comprising an installation module (3);
wherein the wear-resistant liners (1) are integrally made of ceramic materials and the self-fixing liners (2) are made of ductile materials;
wherein a wear-resistant liner (1) is shaped in a circular arc adapted to an inner wall of the ball mill drum, wherein a side of the wear resistant liner (1) fitted to the inner wall of the drum is a smooth surface or a hollow surface, while another side of the wear resistant liner (1) is a working surface, wherein the working surface is integrally in the shape of a wave distributed along a circumference of the drum, and a plurality of grooves (11) for guiding the movement of mill balls is uniformly arranged on the working surface along an axial direction of the drum;
wherein the plurality of the self-fixing liners (2) are fully uniformly arranged on the circumference of the ball mill drum (5) at intervals;
wherein the plurality of wear-resistant liners (1) and self-fixing liners (2) are assembled towards the axial direction of the ball mill drum to form a working surface of the ball mill, wherein when the ball mill is in operation, the self-fixing liners (2) bear the materials and the pressure radially applied by the mill balls along the ball mill drum and extend circumferentially, thus making the connection firmer with the wear-resistant liners (1) in the ball mill drum,
wherein a group of a wear-resistant liner (1) and the installation module (3) is fitted between two adjacent self-fixing liners (2),
wherein the self-fixing liners (2) and wear-resistant liners (1) are provided with two lug bosses (7) to form lug boss ends at the same direction end surface along the circumference of the drum, wherein sides opposite to the lug boss ends are plane;
wherein a side of the installation module (3) is connected with the plane end of the wear-resistant liner (1),
wherein the self-fixing liner (2) is connected with the end of the wear-resistant liner (1) having the lug boss (7), the lug boss end of the self-fixing liner (2) is fitted against the other side of the installation module (3);
wherein the wear-resistant liner (1) and the self-fixing liner (2) form a two-point contact connection with each adjacent self-fixing liner (3) and installation module (3) through each lug boss end, thus enabling firm matching between the liners; and
wherein a hard gasket (6) is arranged between each self-fixing liner (2) and installation module (3) through interference insertion, thus enabling adequate contact among the wear-resistant liner (1), the self-fixing liner (2) and the installation module (3), and preventing the gasket (6) with the installation module (3) from damaging the self-fixing liner (2) due to interference insertion.

2. The ball mill drum according to Claim 1, wherein each self-fixing liner (2) is provided with screw holes (21).

3. The ball mill drum according to Claim 1, wherein the lug boss (7) provided on each self-fixing liner (2) has oblique angles or circular arcs at both sides along the axial direction of the ball mill.

4. The ball mill drum according to Claim 1, wherein the installation module (3) is made of low-carbon alloy steel or steel plates.

5. The ball mill drum according to Claim 1, wherein the ductile material is carbon steel or low-carbon alloy steel.

6. A method of installing a ball mill drum with a ball mill liner assembly fitted therein according to Claim 1, comprising the following steps to:
firstly arranging a plurality of self-fixing liners (2) along a circumferential direction of the ball mill drum at intervals, dividing the drum into several areas and utilizing existing screw holes of the ball mill drum to fix the self-fixing liner (2); placing the wear-resistant liner (1) into a self-fixing division area of the self-fixing liner (2) in the ball mill drum circumferentially in the area between both adjacent self-fixing liners (2); placing the installation module (3) above the lug boss (7) on the self-fixing liner (2), enabling it to contact the end of the self-fixing liner (2) with the lug boss (7) and contact the end of the wear-resistant liner (1) without the lug boss (7); inserting an iron wedge into a gap between the self-fixing liner (2) and the installation module (3) and hammering the iron wedge to fasten the liners at both sides along the circumferential direction; inserting the gasket (6) into the gap between the self-fixing liner (2) and the installation module (3) to realize a tight fit among the liners in the whole area; and withdrawing the iron wedge.

## Patentansprüche

1. Kugelmühlentrommel mit einer darin eingebauten Kugelmühlenauskleidungsanordnung, umfassend:
eine Vielzahl von verschleißfesten Auskleidungen (1) und selbstbefestigenden Auskleidungen (2), die abwechselnd in eine Innenwand der Trommel eingepasst sind, und ferner ein Installationsmodul (3);
wobei die verschleißfesten Auskleidungen (1) einstückig aus keramischen Materialien hergestellt sind und die selbstbefestigenden Auskleidungen (2) aus duktilen Materialien hergestellt sind;
wobei eine verschleißfeste Auskleidung (1) in einem Kreisbogen geformt ist, der an eine Innenwand der Kugelmühlentrommel angepasst ist, wobei eine Seite der verschleißfesten Auskleidung, die an die Innenwand der Trommel angepasst ist, eine glatte Oberfläche oder eine hohle Oberfläche ist, während eine andere Seite der verschleißfesten Auskleidung (1) eine Arbeitsoberfläche ist, wobei
die Arbeitsfläche einstückig die Form einer Welle hat, die entlang eines Umfangs der Trommel verteilt ist, und eine Vielzahl von Rillen (11) zur Führung der Bewegung von Mühlenkugeln gleichmäßig auf der Arbeitsfläche entlang einer axialen Richtung der Trommel angeordnet ist;
wobei die Vielzahl der selbstbefestigenden Auskleidungen (2) vollständig gleichmäßig auf dem Umfang der Kugelmühlentrommel (5) in Abständen angeordnet ist;
wobei die Vielzahl von verschleißfesten Auskleidungen (1) und selbstbefestigenden Auskleidungen (2) zur axialen Richtung der Kugelmühlentrommel hin zusammengebaut sind, um eine Arbeitsfläche der Kugelmühle zu bilden, wobei, wenn die Kugelmühle in Betrieb ist, die selbstbefestigenden Auskleidungen (2) die Materialien und den von den Mühlenkugeln radial entlang der Kugelmühlentrommel ausgeübten Druck tragen und sich in Umfangsrichtung erstrecken, wodurch die Verbindung mit den verschleißfesten Auskleidungen (1) in der Kugelmühlentrommel fester wird, wobei eine Gruppe aus einer verschleißfesten Auskleidung (1) und dem Installationsmodul (3) zwischen zwei benachbarten selbstbefestigenden Auskleidungen (2) eingebaut ist,
wobei die selbstbefestigenden Auskleidungen (2) und verschleißfesten Auskleidungen (1) mit zwei Nasenvorsprüngen (7) versehen sind, um Nasenvorsprungsenden an der gleichgerichteten Endfläche entlang des Umfangs der Trommel zu bilden, wobei die den Nasenvorsprungsenden gegenüberliegenden Seiten eben sind;
wobei eine Seite des Installationsmoduls (3) mit dem ebenen Ende der verschleißfesten Auskleidung (1) verbunden ist,
wobei die selbstbefestigende Auskleidung (2) mit dem Ende der verschleißfesten Auskleidung (1) verbunden ist, das den Nasenvorsprung (7) aufweist, wobei das Ende des Nasenvorsprungs der selbstbefestigenden Auskleidung (2) an der anderen Seite des Installationsmoduls (3) angebracht ist;
wobei die verschleißfeste Auskleidung (1) und die selbstbefestigende Auskleidung (2) eine Zweipunkt-Kontaktverbindung mit jeder benachbarten selbstbefestigenden Auskleidung (3) und dem Installationsmodul (3) durch jedes Nasenende bilden, wodurch eine feste Anpassung zwischen den Auskleidungen ermöglicht wird; und
wobei eine harte Dichtung (6) zwischen jeder selbstbefestigenden Auskleidung (2) und dem Installationsmodul (3) durch Interferenzeinfügung angeordnet ist, wodurch ein ausreichenden Kontakt zwischen der verschleißfesten Auskleidung (1), der selbstbefestigenden Auskleidung (2) und dem Installationsmodul (3) ermöglicht wird, und es wird verhindert, dass die Dichtung (6) mit dem Installationsmodul (3) die selbstbefestigende Auskleidung (2) aufgrund des Übermaßes an Einfügung beschädigt.

2. Kugelmühlentrommel nach Anspruch 1, wobei jede selbstbefestigende Auskleidung (2) mit Schraubenlöchern (21) versehen ist.

3. Kugelmühlentrommel nach Anspruch 1, wobei der an jeder selbstbefestigenden Auskleidung (2) vorgesehene Nasenvorsprung (7) an beiden Seiten entlang der axialen Richtung der Kugelmühle schräge Winkel oder Kreisbögen aufweist.

4. Kugelmühlentrommel nach Anspruch 1, wobei das Installationsmodul (3) aus kohlenstoffarmem legiertem Stahl oder Stahlplatten hergestellt ist.

5. Kugelmühlentrommel nach Anspruch 1, wobei das duktile Material Kohlenstoffstahl oder kohlenstoffarmer legierter Stahl ist.

6. Verfahren zum Installieren einer Kugelmühlentrommel mit einer darin eingebauten Kugelmühlenauskleidung nach Anspruch 1, umfassend die folgenden Schritte:
erstens das Anordnen einer Vielzahl von selbstbefestigenden Auskleidungen (2) entlang einer Umfangsrichtung der Kugelmühlentrommel in Abständen, das Unterteilen der Trommel in mehrere Bereiche und das Verwenden vorhandener Schraubenlöcher der Kugelmühlentrommel zum Befestigen der selbstbefestigenden Auskleidung (2); Anordnen der verschleißfesten Auskleidung (1) in einem selbstbefestigenden Teilungsbereich der selbstbefestigenden Auskleidung (2) in der Kugelmühlentrommel in Umfangsrichtung in dem Bereich zwischen den beiden benachbarten selbstbefestigenden Auskleidungen (2); Anordnen des Installationsmoduls (3) über dem Nasenvorsprung (7) an der selbstbefestigenden Auskleidung (2), wodurch es das Ende der selbstbefestigenden Auskleidung (2) mit dem Nasenvorsprung (7) und das Ende der verschleißfesten Auskleidung (1) ohne den Nasenvorsprung (7) berühren kann; Einsetzen eines Eisenkeils in einen Spalt zwischen der selbstbefestigenden Auskleidung (2) und dem Installationsmodul (3) und Einschlagen des Eisenkeils, um die Auskleidungen auf beiden Seiten entlang der Umfangsrichtung zu befestigen; Einsetzen der Dichtung (6) in den Spalt zwischen der selbstbefestigenden Auskleidung (2) und dem Installationsmodul (3), um einen festen Sitz zwischen den Auskleidungen in dem gesamten Bereich zu realisieren; und Zurückziehen des Eisenkeils.

## Revendications

1. Tambour de broyeur à boulets avec un ensemble de revêtement de broyeur à boulets monté à l'intérieur, comprenant :
une pluralité de revêtements résistants à l'usure (1) et de revêtements autofixants (2) montés en alternance dans une paroi interne du tambour et comprenant en outre un module d'installation (3) ;
dans lequel les chemises résistantes à l'usure (1) sont intégralement réalisées en matériaux céramiques et les chemises auto-fixantes (2) sont réalisées en matériaux ductiles ;
dans lequel un revêtement résistant à l'usure (1) est formé en un arc circulaire adapté à une paroi interne du tambour du broyeur à boulets, dans lequel un côté du revêtement résistant à l'usure (1) ajusté à la paroi interne du tambour est une surface lisse ou une surface creuse, tandis qu'un autre côté du revêtement résistant à l'usure (1) est une surface de travail, dans lequel
la surface de travail est intégralement en forme de vague distribuée le long d'une circonférence du tambour, et une pluralité de rainures (11) pour guider le mouvement des boules de broyage est uniformément disposée sur la surface de travail le long d'une direction axiale du tambour ;
dans lequel la pluralité des revêtements autofixants (2) est disposée de manière entièrement uniforme sur la circonférence du tambour de broyeur à boulets (5) à intervalles ;
dans lequel la pluralité de revêtements résistants à l'usure (1) et de revêtements auto-fixants (2) sont assemblés vers la direction axiale du tambour de broyeur à boulets pour former une surface de travail du broyeur à boulets, dans lequel lorsque le broyeur à boulets est en fonctionnement, les revêtements auto-fixants (2) supportent les matériaux et la pression appliqués radialement par les boules de broyage le long du tambour de broyeur à boulets et s'étendent circonférentiellement, rendant ainsi la connexion plus ferme avec les revêtements résistants à l'usure (1) dans le tambour de broyeur à boulets,
dans lequel un groupe d'un revêtement résistant à l'usure (1) et du module d'installation (3) est monté entre deux revêtements autofixants adjacents (2),
dans lequel les chemises auto-fixantes (2) et les chemises résistantes à l'usure (1) sont munies de deux bossages d'ergot (7) pour former des extrémités de bossage d'ergot au niveau de la surface d'extrémité de même direction le long de la circonférence du tambour, dans lequel les côtés opposés aux extrémités de bossage d'ergot sont plans ;
dans lequel un côté du module d'installation (3) est relié à l'extrémité plane de la doublure résistante à l'usure (1),
dans lequel la doublure auto-fixante (2) est reliée à l'extrémité de la doublure résistante à l'usure (1) ayant le bossage de l'ergot (7), l'extrémité du bossage de l'ergot de la doublure auto-fixante (2) est ajustée contre l'autre côté du module d'installation (3) ;
dans lequel la doublure résistante à l'usure (1) et la doublure auto-fixante (2) forment une connexion de contact à deux points avec chaque doublure auto-fixante adjacente (3) et le module d'installation (3) par l'intermédiaire de chaque extrémité de bossage d'ergot, permettant ainsi une correspondance ferme entre les doublures ; et
dans lequel un joint dur (6) est disposé entre chaque doublure autofixante (2) et chaque module d'installation (3) par insertion avec interférence, permettant ainsi un contact adéquat entre la doublure résistante à l'usure (1), la doublure auto-fixante (2) et le module d'installation (3), et empêchant le joint (6) avec le module d'installation (3) d'endommager la doublure auto-fixante (2) en raison de l'insertion par interférence.

2. Tambour de broyeur à boulets selon la revendication 1, dans lequel chaque garniture autofixante (2) est pourvue de trous de vis (21).

3. Tambour de broyeur à boulets selon la revendication 1, dans lequel le bossage de patte (7) prévu sur chaque revêtement auto-fixant (2) présente des angles obliques ou des arcs de cercle des deux côtés le long de la direction axiale du broyeur à boulets.

4. Tambour de broyeur à boulets selon la revendication 1, dans lequel le module d'installation (3) est réalisé en acier allié à faible teneur en carbone ou en plaques d'acier.

5. Tambour de broyeur à boulets selon la revendication 1, dans lequel le matériau ductile est un acier au carbone ou un acier allié à faible teneur en carbone.

6. Procédé d'installation d'un tambour de broyeur à boulets avec un ensemble de revêtement de broyeur à boulets monté à l'intérieur selon la revendication 1, comprenant les étapes suivantes pour :
d'abord disposer une pluralité de revêtements autofixants (2) le long d'une direction circonférentielle du tambour de broyeur à boulets à intervalles, en divisant le tambour en plusieurs zones et en utilisant les trous de vis existants du tambour de broyeur à boulets pour fixer le revêtement autofixant (2) ; placer le revêtement résistant à l'usure (1) dans une zone de division autofixante du revêtement autofixant (2) dans le tambour du broyeur à boulets de manière circonférentielle dans la zone entre les deux revêtements autofixants adjacents (2) ; placer le module d'installation (3) au-dessus du bossage de l'ergot (7) sur le revêtement autofixant (2), lui permettant de contacter l'extrémité du revêtement autofixant (2) avec le bossage de l'ergot (7) et de contacter l'extrémité du revêtement résistant à l'usure (1) sans le bossage de l'ergot (7) ;
insérer un coin en fer dans un espace entre la doublure auto-fixante (2) et le module d'installation (3) et marteler le coin en fer pour fixer les doublures des deux côtés le long de la direction circonférentielle ; insérer le joint (6) dans l'espace entre la doublure auto-fixante (2) et le module d'installation (3) pour réaliser un ajustement serré entre les doublures dans toute la zone ; et retirer le coin en fer.
